# EUROPÄISCHE PATENTANMELDUNG

(11) **EP 4 703 937 A1**
(43) Veröffentlichungstag der Anmeldung: **04.03.2026**
(21) Anmeldenummer: 24197562.2
(22) Anmeldetag: 30.08.2024
(51) Int. Cl.: G06F 21/60, G06F 11/07, G06F 11/30, H04L 9/40

(54) **VERFAHREN ZUM BETREIBEN EINES NETZWERKGERÄTS UND NETZWERKSYSTEM**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Bei dem Verfahren zum Betreiben eines Netzwerkgeräts (IOTD) wird ein Watchdog-Timer (AWD) herangezogen, welcher bei einem Ablauf mindestens eine cybersicherheitsrelevante Betriebsfunktion (SF) des Netzwerkgeräts (IOTD) sperrt, wobei übrige Basisbetriebsfunktionen (BF) des Netzwerkgeräts (IOTD) aufrechterhalten werden, und wobei das Netzwerkgerät (IOTD) einer Prüfung auf Integrität unterzogen wird, und wobei der Watchdog-Timer (AWD) in Abhängigkeit von einem Ergebnis der Prüfung rückgesetzt wird.

Das Netzwerksystem ist zur Ausführung eines solchen Verfahrens ausgebildet.

## Beschreibung

Die Erfindung betrifft ein Verfahren zum Betreiben eines Netzwerkgeräts und ein Netzwerksystem.

Die zunehmende Verbreitung vernetzter Geräte und industrieller Steuerungssysteme führt zu einem verstärkten Fokus auf Cybersicherheit in vernetzten Umgebungen. Diese Geräte, oft als Internet-der-Dinge-Geräte oder loT-Geräte oder industrielle Steuereinheiten bezeichnet, spielen in verschiedenen industriellen Sektoren wie Fertigung, Energie und Transport eine wichtige Rolle. Mit zunehmender Vernetzung solcher Geräte steigt auch ihre Anfälligkeit für Cyberangriffe, die den Betrieb stören, sensible Daten gefährden oder sogar physische Sicherheitsrisiken darstellen können.

Traditionelle Cybersicherheitsmaßnahmen für vernetzte Geräte konzentrierten sich hauptsächlich auf die Verhinderung eines unbefugten Zugriffs und auf die Erkennung von Cyberangriffen. Diese Ansätze umfassen typischerweise Firewalls, Intrusion-Detection-Systeme und regelmäßige Software-Updates. Da Cyberbedrohungen jedoch immer komplexer werden, wächst die Erkenntnis, dass Prävention allein nicht ausreicht. Das Konzept der Cyber-Resilienz hat sich als ergänzender Ansatz herausgebildet, der darauf abstellt, wesentliche Funktionen von Systemen auch bei Angriffen oder Ausfällen aufrechtzuerhalten.

Eine Herausforderung bei der Implementierung von Cyber-Resilienz für vernetzte Geräte besteht darin, einerseits einen kontinuierlichen Betrieb aufrechtzuerhalten und gleichzeitig andererseits auf potenzielle Sicherheitsverletzungen zu reagieren. Viele industrielle Systeme haben für Ausfallzeiten aufgrund von Sicherheitsmaßnahmen nur eine geringe Toleranz, müssen aber dennoch vor anhaltenden Bedrohungen geschützt werden. Zusätzlich erschwert die Vielfalt vernetzter Geräte, welche von einfachen Sensoren bis hin zu komplexen Steuerungssystemen reicht, eine Implementierung einer einheitlichen Sicherheitslösung.

Ein weiteres Problem ist die Verwaltung kryptographischer Schlüssel und sicherer Anmeldeinformationen in möglicherweise kompromittierten Geräten. Wenn ein Verdacht besteht, dass ein Gerät manipuliert wurde oder angegriffen wird, besteht die Gefahr, dass sensibles kryptographisches Material offengelegt oder missbraucht wird. Eine vollständige Deaktivierung aller kryptographischen Funktionen würde das Gerät jedoch daran hindern, selbst grundlegende sichere Kommunikation durchzuführen, was es möglicherweise vom Netzwerk isoliert, Wiederherstellungsoperationen verhindert und somit ebenfalls die Sicherheit beeinträchtigt.

Darüber hinaus erschwert die zunehmende Komplexität vernetzter Systeme eine abschließende Beurteilung der Geräteintegrität. Herkömmliche Methoden zur Integritätsprüfung reichen möglicherweise nicht aus, um fortgeschrittene Angriffe oder Manipulationen zu erkennen, insbesondere in verteilten und heterogenen Umgebungen. Dies schafft einen Bedarf an fortschrittlicheren und flexibleren Ansätzen zur Überwachung und Aufrechterhaltung der Geräteintegrität in Echtzeit.

Somit ist es eine Aufgabe der vorliegenden Erfindung, ein verbessertes Verfahren zum Betreiben eines Netzwerkgeräts bereitzustellen, das ähnliche Vorteile aufweist wie aus dem Stand der Technik bekannte Resilienz-Engines. Darüber hinaus ist es eine Aufgabe der vorliegenden Erfindung, ein verbessertes Netzwerksystem bereitzustellen, mit welchem das verbesserte Verfahren gemäß der Erfindung ausführbar ist.

Diese Aufgaben der vorliegenden Erfindung werden mit einem Verfahren zum Betreiben eines Netzwerkgeräts mit den in Anspruch 1 angegebenen Merkmalen sowie mit einem Netzwerksystem mit den in Anspruch 7 der vorliegenden Erfindung angegebenen Merkmalen gelöst.

Bevorzugte Weiterbildungen der Erfindung sind den zugehörigen Unteransprüchen, der nachfolgenden Beschreibung und der Zeichnung angegeben.

Das erfindungsgemäße Verfahren ist ein Verfahren zum Betreiben eines Netzwerkgeräts. Das erfindungsgemäße Verfahren umfasst eine Verwendung eines Watchdog-Timers, der bei Ablauf mindestens eine cybersicherheitsrelevante Betriebsfunktion des Netzwerkgeräts sperrt, wobei übrige Basisbetriebsfunktionen des Netzwerkgeräts aufrechterhalten werden und wobei das Netzwerkgerät einer Prüfung auf Integrität unterzogen wird und der Watchdog-Timer in Abhängigkeit von einem Ergebnis der Prüfung rückgesetzt wird.

Vorteilhafterweise kann infolge der Verwendung eines Watchdog-Timers, der selektiv cybersicherheitsrelevante Betriebsfunktionen sperrt, während Basisbetriebsfunktionen des Netzwerkgeräts aufrechterhalten werden, das Netzwerkgerät auch im Falle einer möglichen Kompromittierung des Netzwerkgeräts in begrenztem Umfang weiter betrieben werden. Dies erhöht die Widerstandsfähigkeit des Netzwerkgeräts gegen Angriffe bei gleichzeitiger Beibehaltung wesentlicher Funktionalität, nämlich der übrigen Basisbetriebsfunktionen. Der Mechanismus zur Prüfung auf Integrität und einer Watchdog-Timer-Rücksetzung in Abhängigkeit von einem Ergebnis der Prüfung stellt sicher, dass durch den Watchdog-Timer getriggert regelmäßig ein Sicherheitsstatus des Geräts regelmäßig überprüft wird, was eine schnelle Erkennung und Reaktion auf Sicherheitsrisiken ermöglicht.

Bevorzugt wird bei dem erfindungsgemäßen Verfahren das Netzwerkgerät regelmäßig, insbesondere wiederholt, vorzugsweise in insbesondere regelmäßigen Zeitabständen, einer Prüfung auf Integrität unterzogen.

In einer vorteilhaften Weiterbildung des erfindungsgemäßen Verfahrens ist oder umfasst die Prüfung auf Integrität eine Prüfung auf Manipulationsfreiheit des Netzwerkgeräts. In dieser Weiterbildung der Erfindung wird infolge einer Konzentration auf die Erkennung von Manipulationen die Sicherheit des Netzwerkgeräts vor Kompromittierung insbesondere beim Betrieb des Netzwerkgeräts deutlich erhöht.

Der Watchdog-Timer ist bei dem erfindungsgemäßen Verfahren bevorzugt ein Timer eines Timeout-Watchdogs. Die Verwendung eines Timeout-Watchdogs bietet den Vorteil eines einfachen, aber effektiven Mechanismus zur Auslösung von Sicherheitsmaßnahmen. Dieser Ansatz ist robust gegen verschiedene Arten von Angriffen und Systemausfällen und schwer umgehbar.

Die mindestens eine cybersicherheitsrelevante Betriebsfunktion ist in einer bevorzugten Weiterbildung des erfindungsgemäßen Verfahrens eine kryptographische Funktion.

Durch die spezifische Sperrung kryptographischer Funktionen beim Ablauf des Watchdog-Timers verhindert diese vorteilhafte Weiterbildung des erfindungsgemäßen Verfahrens, dass kompromittierte Geräte sensible kryptographische Operationen durchführen. Dies reduziert folglich das Risiko eines unbefugten Zugriffs auf verschlüsselte Daten oder des Missbrauchs kryptographischer Schlüssel und schützt somit die Integrität, eine sichere Kommunikation sowie Daten des Netzwerkgeräts.

Die mindestens eine cybersicherheitsrelevante Betriebsfunktion umfasst in einer bevorzugten Weiterbildung des erfindungsgemäßen Verfahrens den Zugriff auf mindestens einen Speicher mit mindestens einem kryptographischen Schlüsselmaterial. Dieses Merkmal bietet einen zusätzlichen Schutz, indem der Zugriff auf kryptographisches Schlüsselmaterial eingeschränkt wird, wenn die Integrität des Netzwerkgeräts in Zweifel steht. Durch den Schutz des Schlüsselmaterials verhindert diese Weiterbildung der Erfindung, dass Angreifer Zugang zu kritischen Sicherheitsressourcen erhalten, selbst wenn es ihnen eine Kompromittierung anderer Teile des Systems gelingt.

In einer vorteilhaften Weiterbildung der Erfindung umfasst bei dem Verfahren mindestens eine grundlegende Betriebsfunktion des Netzwerkgeräts den Zugriff auf mindestens ein kryptographisches Ersatzschlüsselmaterial.

In dieser Weiterbildung der Erfindung kann das Netzwerkgerät wesentliche kryptographische Operationen unter Verwendung von Ersatzschlüsselmaterial fortsetzen, auch wenn der Zugriff auf das eigentliche, primäre, Schlüsselmaterial gesperrt ist. Dies stellt sicher, dass grundlegende Sicherheitsfunktionen, wie eine sichere Kommunikation und Authentifizierung während eines möglichen Cyberangriffs aufrechterhalten werden können, wodurch Sicherheit und unterbrechungsfreier Betrieb verbessert sind.

Das erfindungsgemäße Netzwerksystem ist zur Ausführung eines Verfahrens wie oben beschrieben ausgebildet. Das Netzwerksystem umfasst mindestens ein Netzwerkgerät mit mehreren Anwendungsfunktionen und einem Watchdog-Timer, wobei der Watchdog-Timer so konfiguriert ist, dass er bei Ablauf mindestens eine cybersicherheitsrelevante Funktion des Netzwerkgeräts sperrt. Das Netzwerksystem umfasst ferner eine Überwachungseinheit, die so konfiguriert ist, dass sie das Netzwerkgerät einer Integritätsprüfung des Netzwerkgeräts unterzieht und den Watchdog-Timer in Abhängigkeit vom Ergebnis der Prüfung rücksetzt.

Vorteilhafterweise ermöglicht das erfindungsgemäße Netzwerksystem eine verbesserte Sicherheit eines Netzwerks von Netzwerkgeräten. Die erfindungsgemäß mögliche und besonders bevorzugt vorgesehene bauliche Trennung der Überwachungseinheit vom Netzwerkgerät erhöht die Sicherheit zusätzlich, indem sie einen unabhängigen Mechanismus für Integritätsprüfungen und ein Management des Watchdog-Timers bereitstellt.

In einer bevorzugten Weiterbildung der Erfindung ist das Netzwerkgerät als erfindungsgemäßes Netzwerksystem anzusehen. Besonders bevorzugt treten bei dem erfindungsgemäßen Netzwerksystem allerdings noch zusätzliche Komponenten zusätzlich zum Netzwerkgerät hinzu.

Das erfindungsgemäße Netzwerksystem umfasst bevorzugt einen Cloud-Dienst, der so konfiguriert ist, dass er den Watchdog-Timer zurücksetzt. Die Nutzung eines Cloud-Dienstes für das Rücksetzen des Watchdog-Timers bietet die Vorteile der Skalierbarkeit, der Fernverwaltung und potenziell flexiblerer, komplexerer oder anpassbarer Algorithmen zur Integritätsprüfung. Dies ermöglicht ein robusteres und flexibleres Sicherheitsmanagement, insbesondere für großflächige Einsätze von Netzwerkgeräten. Zudem stellt ein Cloud-Dienst eine weitere unabhängige Komponente dar, welche infolgedessen die Sicherheit zusätzlich erhöht.

Die Überwachungseinheit ist in einer bevorzugten Weiterbildung des erfindungsgemäßen Netzwerksystems Teil des Netzwerkgeräts.

Diese Weiterbildung der Erfindung bietet den Vorteil eines in sich geschlossenen Sicherheitsmanagements, wodurch die Abhängigkeit von externen Systemen reduziert und folglich die Reaktionszeiten auf erkannte Integritätsprobleme verbessert werden kann.

Die Überwachungseinheit ist in einer alternativen und ebenfalls vorteilhaften Weiterbildung der Erfindung physisch vom Netzwerkgerät getrennt. Eine physisch getrennte Überwachungseinheit bietet erhöhte Sicherheit, indem sie die Prüfung der Integrität nicht auf einem möglicherwiese kompromittierten Netzwerkgeräts selbst ausführt. Diese physische Trennung erschwert es einem Angreifer, Sicherheitsmaßnahmen zu deaktivieren oder zu umgehen.

Das Netzwerksystem ist besonders bevorzugt ein Fertigungssystem und/oder ein Wartungssystem und/oder ein Logistiksystem.

Bei solchen industriellen Netzwerksystemen ist ein kontinuierlicher Betrieb bei gleichzeitig hoher Cybersicherheit regelmäßig von hoher Bedeutung. Der erfindungsgemäße Vorteil einer gleichzeitigen Gewährleistung von Cybersicherheit und gleichzeitig die Verfügbarkeit von Basisfunktionalität ist vorliegend gerade im vorgenannten industriellen Umfeld von Bedeutung. Gerade im industriellen Umfeld sind Ausfallzeiten infolge von unsicheren und/oder nicht funktionalen Netzwerkgeräten besonders teuer.

Nachfolgend wird die Erfindung anhand eines in der Zeichnung dargestellten Ausführungsbeispiels näher erläutert.

Es zeigen:

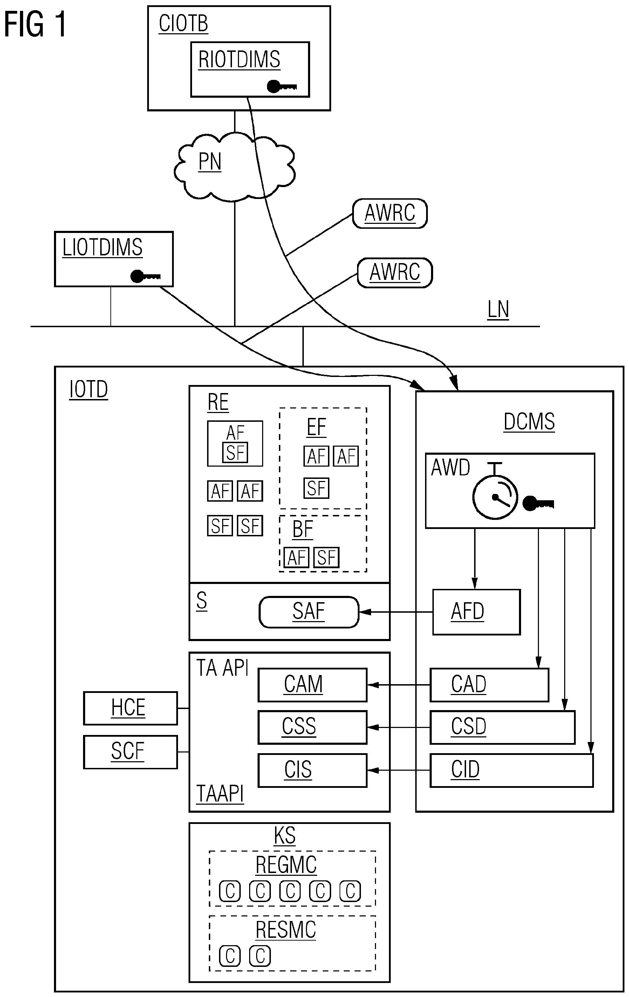

- Fig. 1: eine Darstellung eines erfindungsgemäßen loT-Geräts und seiner zugehörigen Komponenten in einem industriellen Netzwerk schematisch in einer Prinzipskizze, sowie
- Fig. 1: eine Darstellung eines erfindungsgemäßen loT-Geräts und seiner zugehörigen Komponenten in einem industriellen Netzwerk schematisch in einer Prinzipskizze, sowie
- Fig. 1: eine Darstellung eines erfindungsgemäßen loT-Geräts und seiner zugehörigen Komponenten in einem industriellen Netzwerk schematisch in einer Prinzipskizze.

Fig. 1 zeigt eine Prinzipskizze eines loT-Geräts IOTD als Teil eines erfindungsgemäßen Netzwerksystems und dessen zugehörige Komponenten. Das loT-Gerät IOTD umfasst eine Laufzeitumgebung RE, in welcher Anwendungsfunktionen AF und Sicherheitsfunktionen SF ablaufen. Innerhalb der Laufzeitumgebung RE sind sogenannte essentielle Funktionen EF und Basisfunktionen BF vorgesehen, die jeweils ihre eigenen Anwendungsfunktionen AF und Sicherheitsfunktionen SF enthalten.

Das in Fig. 1 dargestellte loT-Gerät IOTD weist ein Geräte-Cyberresilienz-Managementsystem DCMS auf, das als Resilience Engine fungiert und einen authentifizierten Watchdog AWD umfasst. Das Geräte-Cyberresilienz-Managementsystem DCMS ist mit einem Aktivierte-Funktionen-Determinator (Activated Function Determiner) AFD, einem Zugriffsberechtigungs-Determinator (Credential Access Determiner) CAD und einem Krypto-Implementierungs-Determinator (Crypto Implementation Determiner) CID verbunden.

Das loT-Gerät IOTD weist zudem eine Trust-Anchor-API TAAPI auf und umfasst einen Zugriffsberechtigungs-Manager (Credential Access Manager) CAM, einen Krypto-Service-Selektor (Crypto Service Selector) CSS und einen Krypto-Implementierungs-Selektor (Crypto Implementation Selector) CIS. Diese Komponenten interagieren mit dem Geräte-Cyberresilienz-Managementsystem DCMS.

Das loT-Gerät IOTD enthält zudem einen Scheduler S mit einer Scheduler-Anwendungsfunktion SAF.

Das loT-Gerät IOTD enthält auch einen Schlüsselspeicher KS mit regulären Credentials REGMC und Reserve-Credentials RESMC. Zusätzlich umfasst das loT-Geräts IOTD eine Hardware-Krypto-Engine HCE und ein Modul für sichere Krypto-Funktionen SCF.

Außerhalb des loT-Geräts IOTD umfasst das erfindungsgemäße Netzwerksystem ein Cloud-loT-Backend CIOTB mit einem Remote-IoT-Geräte-Integritätsüberwachungssystem RIOTDIMS sowie davon physisch getrennt ein lokales loT-Geräte-Integritätsüberwachungssystem LIOTDIMS. Diese Komponenten kommunizieren mit dem loT-Gerät IOTD über ein öffentliches Netzwerk PN und ein lokales Netzwerk LN und senden authentifizierte Watchdog-Reset-Befehle AWRC an das loT-Gerät IOTD.

Sowohl das lokale Geräte-Integritätsüberwachungssystem LIOTDIMS als auch das Remonte-IoT-Geräte-Integritätsüberwachungssystem RIOTDIMS überwachen die Integrität des loT-Geräts IOTD. Solange diese das loT-Gerät IOTD als integer und unmanipuliert erkennen, stellen sie die authentifizierten Watchdog-Reset-Befehle AWRC dem loT-Gerät IOTD bereit.

Diese authentifzierten Watchdog-Reset-Befehle AWRC führen dazu, dass der authentifizierte Watchdog AWD zurückgesetzt wird und das loT-Gerät IOTD im regulären Betriebsmodus verbleibt. Wenn dagegen für eine gewisse Zeitspanne, z.B. 1 Minute 10 Minuten, 1h oder 1 Tag, keine gültiger Watchdog-Reset-Befehl AWRC empfangen wird, läuft der authentifizierte Watchdog AWD ab. Dadurch aktiviert das loT-Gerät IOTD einen eingeschränkten Betriebsmodus (resilience mode), in dem es aber noch eingeschränkt nutzbar ist. Die Einschränkungen können betreffen:
- Beschränkung der aktivierten Funktionen (Anwendungsfunktionen AF, Sicherheitsfunktionen AF), die durch den Scheduler noch zur Ausführung gebracht werden.
- Beschränkung der durch eine Sicherheitsfunktion SF (eigenständig oder in Anwendungsfunktion AF integriert) nutzbaren regulären Credentials REGMC.
- Festlegen einer Menge von regulären Credentials REGMC. Anstatt des nicht nutzbaren regulären Credentials REGMC können dabei Ersatz-Credentials RESMC der Sicherheitsfunktion SF zur Nutzung bereitgestellt werden.
- Beschränkung der nutzbaren Crypto-Implementierungen. Dadurch kann z.B. verhindert werden, dass eine Software-basierte Crypto-Implementierung benutzt wird, die möglicherweise bei einem manipulierten Gerät, d.h. einem Gerät mit manipulierter Firmware/Software oder bei dem aktuell eine Schwachstelle der ausgeführten Firmware/Software ausgenutzt wird, kompromittiert sein könnte.

Die Policy-Entscheidung wird bei diesem Beispiel durch das Geräte-Cyberresilienz-Managementsystem DCMS getroffen. Dieses kann z.B. in einer speziell geschützten Ausführungsumgebung oder auf einem Resilience-Management-Baustein realisiert sein. Die Umsetzung der Policy kann durch die Trust-Anchor-API TAAPI erfolgen, die die kryptographische Security-Funktionalität den Anwendungsfunktionen und Sicherheitsfunktionen des Geräts über eine Schnittstelle bereitstellt. Dies hat den Vorteil, dass die erfindungsgemäße Funktionalität unabhängig von der Trust-Anchor-Implementierung (Schlüsselspeicher, Crypto-Implementierung) umgesetzt werden kann, und dadurch auch mit nicht speziell angepassten Trust-Anchor-Implementierungen nutzbar ist. Es ist jedoch auch möglich, dass das Geräte-Cyberresilienz-Managementsystem DCMS direkt auf einen speziell angepasste Trust-Anchor-Implementierung einwirkt, die die beschriebene Funktionalität umsetzt.

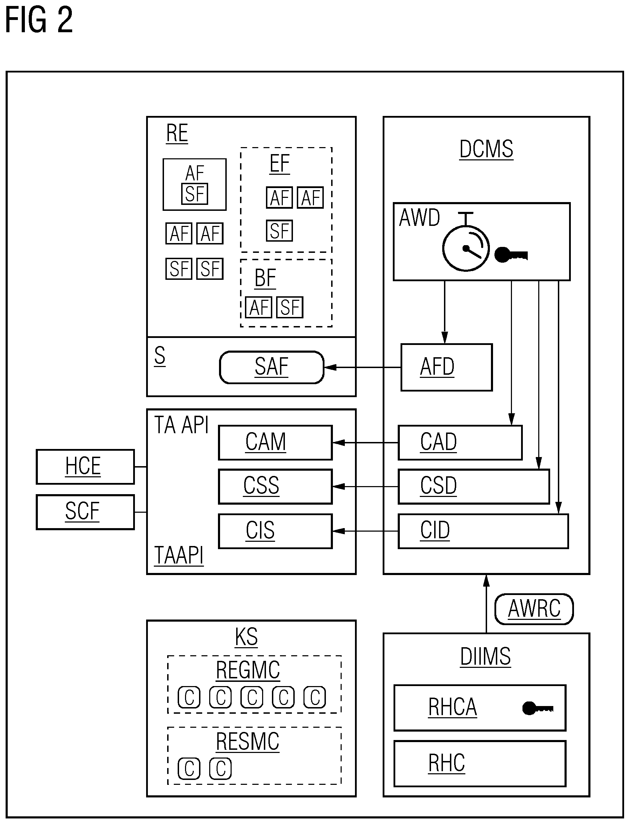

Fig. 2 zeigt eine Realisierungsvariante, bei dem das loT-Gerät IOTD eine integrierte Geräteintegritätsüberwachungseinheit DIIMS aufweist. Diese verfügt über eine Runtime-Health-Check-Einheit RHC, die die Integrität des loT-Geräts IOTD überwacht, beispielsweise durch Ermitteln von kryptographischen Prüfsummen der ausgeführten Applikationsfunktionen, Sicherheitsfunktionen und der Basissoftware (Betriebssystem, Ausführungsumgebung) des loT-Geräts IOTD, Überwachung von Tamper-Sensoren (z.B. Gehäuseschalter, Strahlungssensor, Näherungssensor, Bohrschutzfolie), Prüfen von Hardware-Komponenten des loT-Geräts (z.B. Prüfen von Seriennummern oder Komponenten-Fingerprints, z.B. elektrische Eigenschaften wie Impedanz, Streuparameter, Time-Domain-Reflektionsmuster einer Komponentenschnittstelle). Sie überprüft, ob diese mit Referenz-Prüfsummen übereinstimmen, die in einer Positivliste hinterlegt sind. Das Ergebnis des Runtime-Health-Checks durch die Runtime-Health-Check-Einheit RHC wird einer RHC-Attestierungseinheit RHCA bereitgestellt, die eine kryptographisch geschützte Geräteintegritätsbestätigung bildet und diese als kryptographisch geschützten authentifizierten Watchdog-Reset-Befehl AWRC dem Geräte-Cyberresilienz-Managementsystem DCMS bzw. dessen authentifizierten Watchdog AWD bereitstellt.

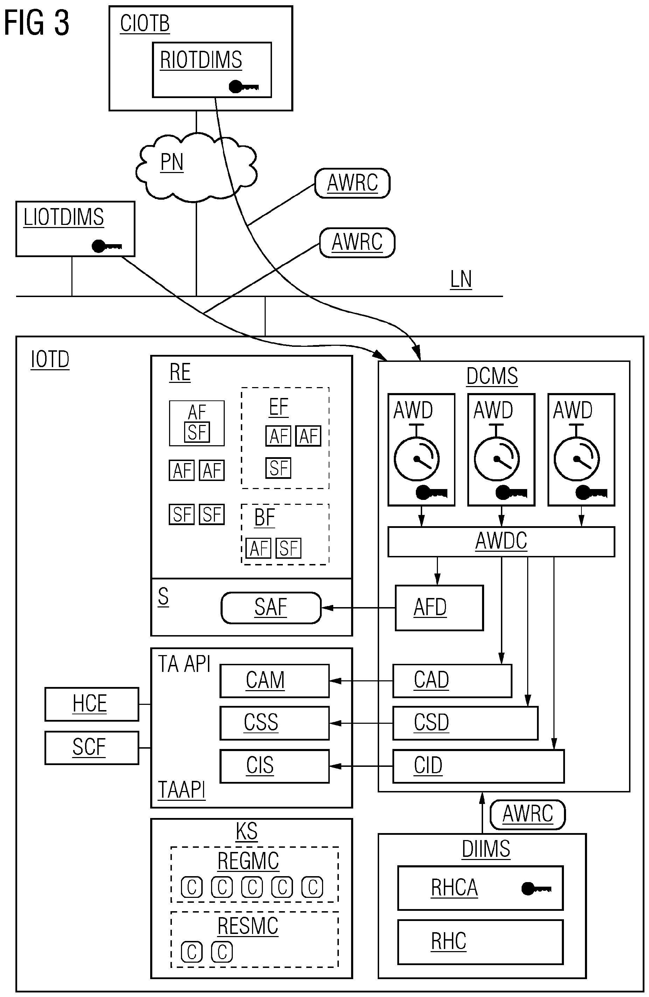

Das in Fig. 3 gezeigte Netzwerksystem mit dem loT-Gerät IOTD enthält einen Scheduler S mit einer Scheduler-Anwendungsfunktion SAF und eine Trust-Anchor-API TAAPI.

Das System zeigt authentifizierte Watchdog-Reset-Befehle AWRC, die vom Cloud-loT-Backend CIOTB, vom lokalen Geräte-Integritätsüberwachungssystem LIOTDIMS und der integrierten Geräteintegritätsüberwachungseinheit DIIMS an das Geräte-Cyberresilienz-Managementsystem DCMS des loT-Geräts IOTD gesendet werden.

Die Abbildung zeigt ein Beispiel mit drei authentifizierten Watchdogs AWD, deren Ablaufstatus durch einen AWD-Combiner AWDC ausgewertet wird. Diese wertet die Ablaufstatus der mehreren AWD in Kombination aus, um die korrespondierenden Maßnahmen zu ermitteln.

## Patentansprüche

1. Verfahren zum Betreiben eines Netzwerkgeräts (IOTD), bei welchem ein Watchdog-Timer (AWD) herangezogen wird, welcher bei einem Ablauf mindestens eine cybersicherheitsrelevante Betriebsfunktion (SF) des Netzwerkgeräts (IOTD) sperrt, wobei übrige Basisbetriebsfunktionen (BF) des Netzwerkgeräts (IOTD) aufrechterhalten werden, bei welchem das Netzwerkgerät (IOTD) einer Prüfung auf Integrität unterzogen wird, und bei welchem der Watchdog-Timer (AWD) in Abhängigkeit von einem Ergebnis der Prüfung rückgesetzt wird.

2. Verfahren nach dem vorhergehenden Anspruch, bei welchem die Prüfung auf Integrität eine Prüfung auf Manipulationsfreiheit des Netzwerkgeräts (IOTD) ist.

3. Verfahren nach einem der vorhergehenden Ansprüche, bei welchem der Watchdog-Timer ein Timer eines Timeout-Watchdogs (AWD) ist.

4. Verfahren nach einem der vorhergehenden Ansprüche, bei welchem die mindestens eine cybersicherheitsrelevanten Betriebsfunktion eine kryptographische Funktion (SCF) ist.

5. Verfahren nach einem der vorhergehenden Ansprüche, bei welchem die mindestens eine cybersicherheitsrelevante Betriebsfunktion einen Zugriff auf mindestens einen Speicher (KS) mit mindestens einem kryptographischen Schlüsselmaterial umfasst.

6. Verfahren nach einem der vorhergehenden Ansprüche, bei mindestens eine Basisbetriebsfunktion (BF) des Netzwerkgeräts (IOTD) einen Zugriff auf mindestens ein kryptographisches Ersatzschlüsselmaterial (RESMC) umfasst.

7. Netzwerksystem zur Ausführung eines Verfahrens nach einem der vorhergehenden Ansprüche, mit mindestens einem Netzwerkgerät (IOTD) mit mehreren Anwendungsfunktionen (AF) und mit einem Watchdog-Timer (AWD), wobei der Watchdog-Timer (AWD) eingerichtet ist, bei einem Ablauf mindestens eine cybersicherheitsrelevante Funktion (SF) des Netzwerkgeräts (IOTD) zu sperren, wobei das Netzwerksystem eine Überwachungseinheit (DIIMS) aufweist, welche eingerichtet ist, das Netzwerkgerät (IOTD) einer Prüfung auf Integrität des Netzwerkgeräts (IOTD) zu unterziehen und welches eingerichtet ist, den Watchdog-Timer (AWD) in Abhängigkeit vom Ergebnis der Prüfung rückzusetzen.

8. Netzwerksystem nach dem vorhergehenden Anspruch, welches einen Clouddienst (CIOTB) umfasst, der ausgebildet ist, den Watchdog-Timer (AWD) rückzusetzen.

9. Netzwerksystem nach einem der vorhergehenden Ansprüche, bei welchem die Überwachungseinheit (DIIMS) Teil des Netzwerkgeräts (IOTD) ist.

10. Netzwerksystem nach einem der vorhergehenden Ansprüche, bei welchem die Überwachungseinheit (LIOTDIMS) physisch getrennt vom Netzwerkgerät (IOTD) vorliegt.

11. Netzwerksystem nach einem der vorhergehenden Ansprüche, welches ein Fertigungssystem und/oder ein Wartungssystem und/oder ein Logistiksystem ist.
